# EUROPEAN PATENT SPECIFICATION

(11) **EP 0 385 455 B1**
(45) Date of publication and mention of the grant of the patent: **10.11.1993**
(21) Application number: 90103947.9
(22) Date of filing: 01.03.1990
(51) Int. Cl.: B65G 60/00, B65G 59/06

(54) **Unstacking and stacking device**
Entstapel- bzw. Stapelvorrichtung
Dispositif de dépilage ou empilage

(30) Priority: 01.03.1989 SE 8900700
(43) Date of publication of application: 05.09.1990
(73) Proprietor: PERSTORP AB, 284 80 Perstorp (SE)
(72) Inventor: Jahansson, Carl Christer Jochum, S-260 70 Ljungbyhed (SE)
(74) Representative: Füchsle, Klaus, Dipl.-Ing.

(56) References cited:
- AT-B- 229 227
- DE-A- 3 702 708
- DE-B- 1 144 190
- GB-A- 1 574 036

## Description

The present invention relates to an unstacking and stacking device for handling four transport containers at a time.

Preferably, the invention is intended for unstacking of containers from a pallet respectively stacking of containers on a pallet. However, it is not necessary to use pallets in connection with the present invention.

Stacking devices where one transport container is stacked at a time have been known for a long time. Stacking and unstacking devices are known from, for example, DE-A1-3 702 708, GB-A-1574036 or DE-B-1 144 190. These documents describe devices which support a single container at two sides by by means of movable fingers, or other engagement means. Nowadays, goods are transported in small containers, which are then stacked on pallets. The pallets make a rational handling via different kinds of fork lift trucks possible. The transport containers, which usually are made of plastic, also give a rational handling of goods.

Often it is desirable to place four containers together and stacked in a suitable number of such layers on top of each other on a pallet. Since the pallets have standard measurements the measurements of the containers have been adapted to these. So far it has been necessary to stack these containers by hand one by one on the pallets. This is very heavy and monotonous work. It has been a long-felt want to get rid of this work by rationalization. However, it has not been possible to do so.

According to the present invention it has quite unexpectedly been possible to solve the above problem and bring about an unstacking and stacking device respectively for handling four containers at a time. The device comprises a lifting frame, one side of which can be opened. The frame is movably fixed to a stand in such a manner that it can be operated vertically. A number of finger like means are arranged on the frame. These means can be maneuvered horizontally and are intended to engage with two adjacent sides of each container.

A number of layers of containers arranged four and four on top of each other in a stack, preferably on a pallet, are intended to be fed into the lifting frame by means of a roller conveyor, a conveying belt etc., whereupon the side of the lifting frame which can be opened, has first been opened. Then the roller conveyor is stopped, whereupon the opened side is closed and the lifting frame is adjusted to the right level of height. The finger like means are now extended towards the containers in such a way that they will engage with the upper border of the containers in the lowermost layer of containers.

The whole stack of containers is lifted, whereupon the roller conveyor is started and the pallet is fed out of the device. Now the roller conveyor is stopped and the stack of containers is put down on the roller conveyor by lowering the lifting frame. The engagement of the finger like means with the upper boarders is released, whereupon the lifting frame is lifted up to the level of the upper borders of the second lowermost layer of containers.

The fingerlike means are extended towards the containers again in such a way that they will engage with the upper borders of the second lowermost layer of containers. The stack of containers is now lifted up, whereupon the roller conveyor is started and the lowermost layer of containers is fed out of the device.

The procedure is now repeated until all layers of containers have been fed out of the device and a new stack can be fed in.

The front side of the lifting frame, which side can be opened, can be maneuvered in the horizontal or the vertical plane. Then the front side can consist of a whole or a two-piece bar.

Preferably, the fingerlike means are provided with an upper and a lower leg, whereby the upper border of the containers is intended to be placed between these legs.

The whole lifting frame including the front side, which can be opened, and the fingerlike means can be operated in a mechanical way, for example by means of motion by motor and gear wheels, in a hydraulic or in a pneumatic way.

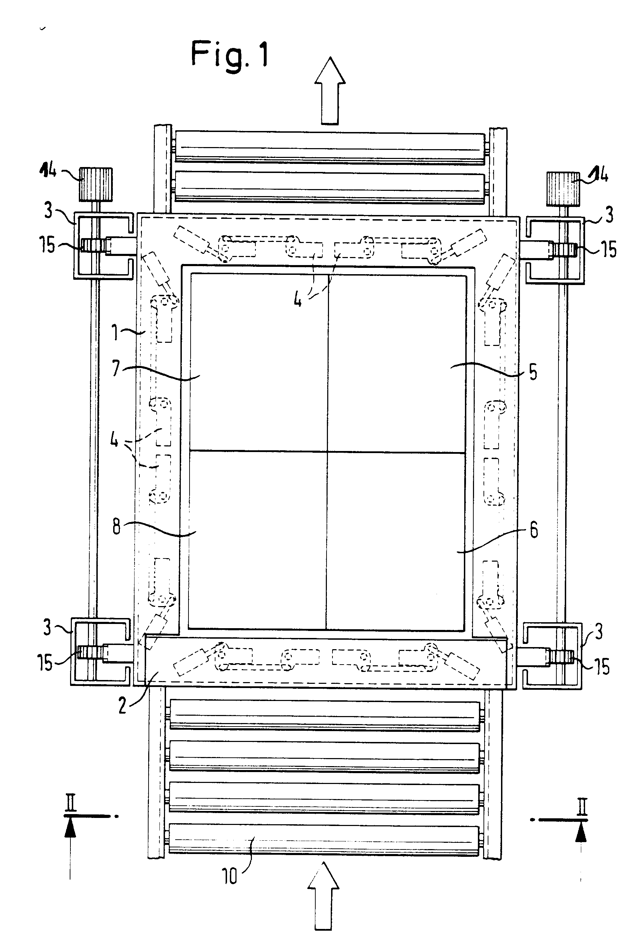

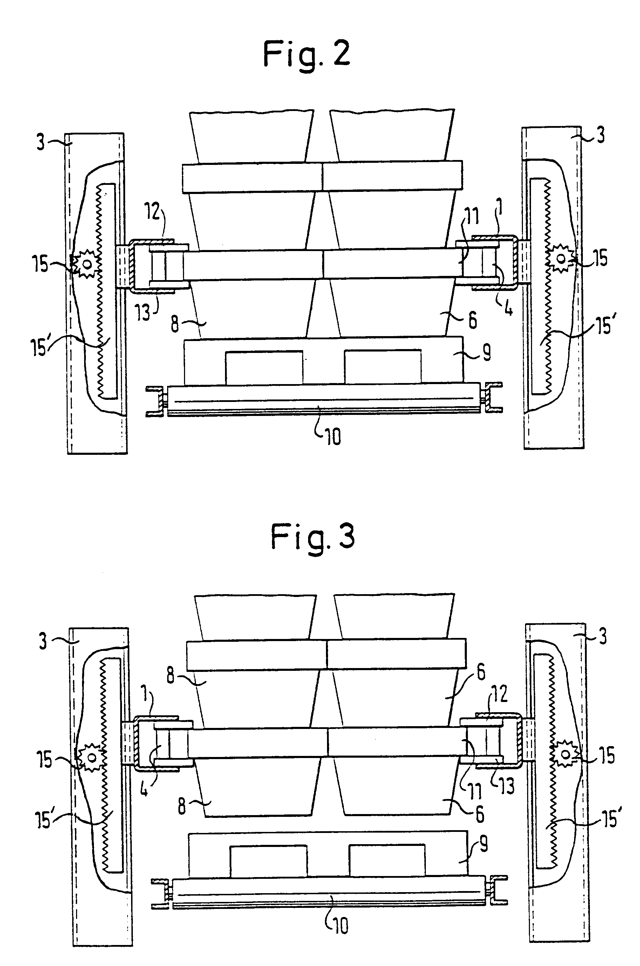

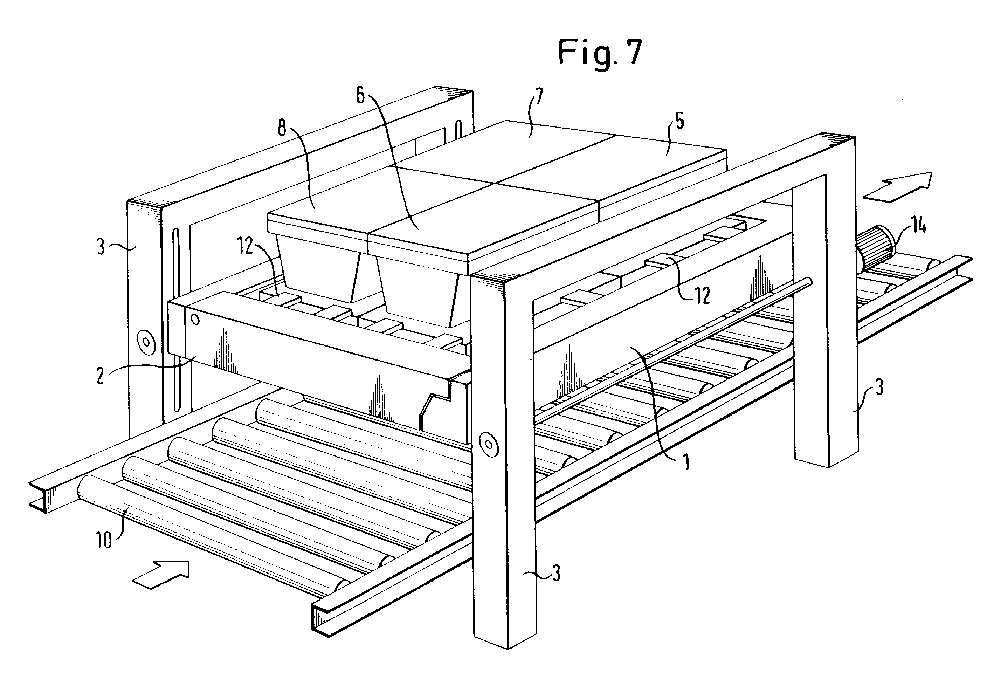

The invention will be explained further in connection with the enclosed figures of which fig. 1 shows a cross-section through one embodiment of a device according to the invention seen from above. Figures 2-6 show a cross-section through the device according to fig. 1 seen from the front. Figures 2-6 illustrate a successive unstacking of containers from a pallet. Fig. 7 shows a perspective view of a device according to fig. 1 with a stack consisting of two layers of containers, which has been lifted up.

On fig. 1 it is shown that the device according to the invention comprises a lifting frame 1, one end 2 of which can be opened. The frame 1 is movably fixed to a stand 3 in such a manner that it can be operated vertically. A number of fingerlike means 4 are arranged on the frame 1.

A stack consisting of a number of layers of containers 5, 6, 7 and 8 is arranged inside the frame 1. The containers 5, 6, 7 and 8 are placed together four and four on top of each other on a pallet 9 (figs. 2 and 3).

The fingerlike means 4 can be operated horizontally and are intended to engage with two adjacent sides of each container 5, 6, 7 and 8. As illustrated on fig. 1, there are fingerlike means 4 along all four sides of the frame 1.

Preferably, the fingerlike means 4 are provided with an upper 12 and a lower leg 13. The upper border 11 of the containers is intended to be placed between the legs 12 and 13. In this way the containers can be lifted up and down in a safe way in spite of the fact that the fingerlike means 4 can only engage with two adjacent sides of each container. Since the containers are placed four and four together, they will support each other at the handling in the stacking device.

Of course, the means 4 can be shaped in another way than with legs 12 and 13 and cooperate with another part of the containers than the upper border 11, for example with an outwards directed part formed along the outer surfaces of the containers.

The stack of containers has been fed into the lifting frame 1 by means of a roller conveyor, a conveying belt etc. 10. The side 2 has then been opened first. This can be made by opening the side 2 vertically or outwards in the horizontal plane. Generally, it is most advantageous if the side 2, which usually has the form of a bar 2 is maneuvered vertically. Then it will occupy the smallest space. The bar can be simple or divided in two bars.

When the stack is on its place in the lifting frame 1, the roller conveyor 10 is stopped and the bar 2 is closed.

The lifting frame 1 (see fig. 2) is adjusted to the right level of height, whereupon the fingerlike means 4 are extended towards the containers 5, 6, 7 and 8 (5 and 7 cannot be seen), in such a way that they will preferably engage with the upper border 11 of the containers in the lowermost layer of containers on the pallet 9.

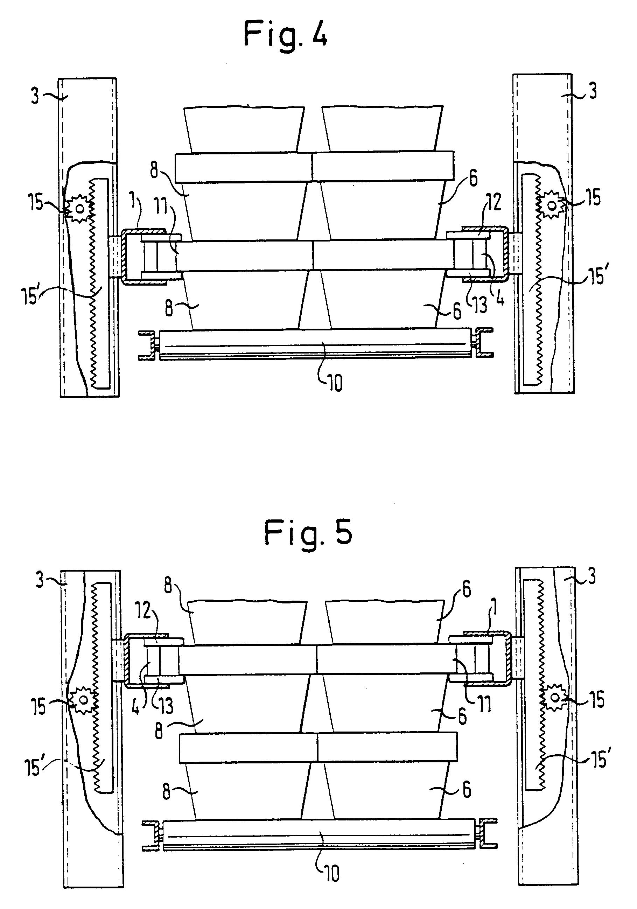

The whole stack of containers is now lifted up (see fig. 3), whereupon the pallet 9 is fed out of the device. The roller conveyor 10 is now stopped, whereupon the stack of containers is put down on the roller conveyor 10 by lowering the lifting frame 1 (see fig. 4).

The engagement of the fingerlike means 4 with the upper border 11 is released, whereupon the lifting frame 1 is lifted up to the level of the upper borders 11 of the second lowermost layer of containers 5, 6, 7 and 8 (see fig. 5).

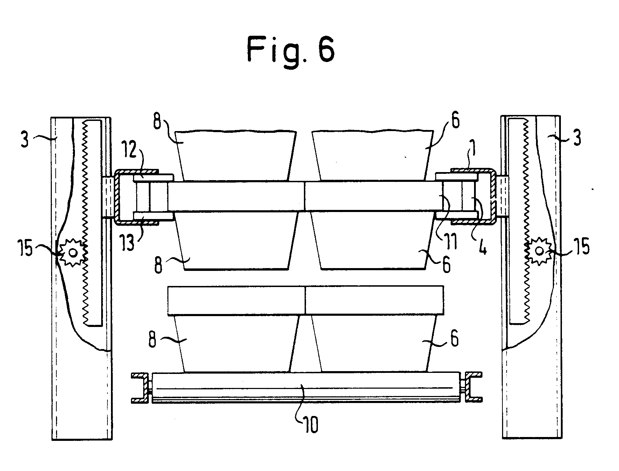

The stack of containers is now lifted up (see fig. 6), whereupon the roller conveyor is started. The first layer of containers is fed out of the device, whereupon the procedure is repeated until all layers of containers 5, 6, 7 and 8 have been fed out of the device and a new stack can be fed in.

On the figures it is schematically illustrated that the lifting frame 1 and the fingerlike means 4 are maneuvered in a mechanical way by means of motion by motor (14) and gear wheels 15 etc. The figures depict a rack (15') and pinion (15) lifting mechanism. However, as mentioned above, it is possible to use hydraulics and pneumatic instead for the operation. Combinations of mechanics, hydraulics and pneumatic are also possible.

The invention is not limited to the embodiment shown, since this can be modified in different ways within the scope of the claims. For example, the device can be used for stacking one container at a time, whereby the container has about the same size as the pallet. It is also possible to stack two containers at a time. Then, the containers have about half the size of the pallet.

Moreover, the device can also be operated as a stacking device instead of an unstacking device. The procedure will then be the opposite of the one disclosed above.

Reference signs in the claims are intended for better understanding and shall not limit the scope.

## Claims

1. A stacking and unstacking device for containers in which each layer of the stack comprises one, two or four containers, comprising:
(a) a horizontally extending lifting frame (1);
(b) a fixed stand (3) having means for lifting and lowering said frame (1); and
(c) a roller conveyor or conveyor belt (10) for supplying and removing a layer or layers of containers to and from said lifting frame (1);
**characterized in that**
(d) said frame (1) is a closed four-sided frame, there being horizontally movable fingerlike means (4) mounted on all four sides of said frame (1) for engagement with a layer of containers; and
(e) one side (2) of said frame (1) is openable.

2. A device according to Claim 1 in which said openable side is movable in a horizontal plane.

3. A device according to Claim 1 in which said openable side is movable in a vertical plane.

4. A device according to anyone of Claims 1 to 3 in which said openable side is a one-piece bar.

5. A device according to any one Claims 1 to 3 in which said openable side is a two-piece bar.

6. A device according to any one of the preceding claims in which the fingerlike means (4) have upper and lower legs (12, 13) whereby a border (11) of the containers may extend between said upper and lower legs.

7. A device according to any one of the preceding claims in which the fixed stand (3) includes mechanical means for raising and lowering the frame (1).

8. A device according to Claim 7 in which said mechanical means comprises a rack (15') and pinion (15).

9. A device according to any one of Claims 1 to 6 in which the fixed stand (3) includes hydraulic or pneumatic means for raising and lowering the frame (1).

10. A device according to any one of the preceding claims in which mechanical means are provided to operate said fingers (4).

11. A device according to any one of Claims 1 to 9 in which hydraulic or pneumatic means are provided to operate said fingers (4).

12. A method of stacking containers having upper borders by means of the device defined in any one of Claims 1 to 11 and in which each layer of the stack comprises one, two or four containers, said method comprising:
(a) feeding a first layer of said containers into the said frame by means of said roller conveyor or conveyor belt (10);
(b) moving said fingers (4) into engagement with the upper borders of the container or containers of said first layer;
(c) raising the first layer of containers to a level higher than a second layer of containers to be stacked;
(d) feeding the second layer of containers to a position below the first layer; and
(e) lowering the frame (1) to place the first layer on the second layer.

13. The method defined in Claim 12 and further comprising:
(f) moving said fingers (4) out of engagement with the first layer;
(g) lowering the frame (1) to a setting in which the fingers (4) are in alignment with the upper borders of the lowermost container or containers in the second layer
(h) moving the fingers (4) into engagement with the upper borders of the lowermost container or containers in the second layer.
(i) raising the second layer and therewith the first layer to a setting in which the second layer is at a level higher than the next layer of containers to be stacked.
(j) repeating the above method until a desired number of layers have been stacked; and then unstacking by:
(k) lowering the frame (1) to a setting in which the lowermost layer of containers is deposited on the roller conveyor or conveyor belt (10);
(l) moving said fingers (4) out of engagement with said lowermost layer of containers.
(m) opening said one side (2) of the frame (1) and
(n) removing said stack of several layers of containers by means of said roller conveyor or conveyor belt (10).

14. A method of unstacking containers that have been stacked according to the method defined in Claim 12 and by means of the device defined in any one of claims 1 to 11, comprising:
(o) raising the frame (1) to raise the first layer off the second layer;
(p) removing the second layer by means of said roller conveyor or conveyor belt (10);
(q) lowering the frame to put the first layer on the roller conveyor or conveyor belt (10).
(r) moving said fingers (4) out of engagement with said first stack of containers;
(s) removing said first layer by means of said roller conveyor or conveyor belt (10).

15. A method of stacking containers according to the method defined in Claim 12 or Claim 13 and wherein before the lowermost layer is lowered a pallet is placed between said lowermost layer and said roller conveyor or conveyor belt.

16. A method of stacking containers having upper borders by means of the device defined in any one of Claims 1 to 11 comprising:
arranging a stack of several layers of containers on a pallet on said roller conveyor or conveyor belt (10), each layer of the stack comprising one, two or four containers:
opening said one side (2) of the frame;
feeding the stack on said pallet into the frame;
closing said side (2) of the frame;
moving said fingers (4) into engagement with the upper borders of the containers of the lowermost layer of the stack;
causing said fingers (4) to raise said stack; and then
moving the pallet out of the frame.

## Patentansprüche

1. Stapel- und Entstapelvorrichtung für Behälter, bei denen jede Schicht des Stapels einen, zwei oder vier Behälter umfaßt, mit:
(a) einem sich horizontal erstreckenden Heberahmen (1);
(b) einem festen Gestell (3) mit Mitteln zum Heben und Senken des Rahmens (1); und
(c) einem Rollenband oder Förderband (10) zum Zuführen und Entfernen einer Schicht oder von Schichten von Behältern zum und vom Heberahmen (1);
dadurch **gekennzeichnet,** daß
(d) der Rahmen (1) ein geschlossener vierseitiger Rahmen ist, wobei horizontal bewegliche fingerartige Elemente (4) an allen vier Seiten des Rahmens (1) zum Eingriff mit einer Schicht von Behältern angebracht sind; und
(e) eine Seite (2) des Rahmens (1) geöffnet werden kann.

2. Vorrichtung gemäß Anspruch 1, wobei die zu öffnende Seite in einer horizontalen Ebene beweglich ist.

3. Vorrichtung gemäß Anspruch 1, wobei die zu öffnende Seite in einer vertikalen Ebene beweglich ist.

4. Vorrichtung gemäß einem der Ansprüche 1 bis 3, wobei die zu öffnende Seite eine einstückige Stange ist.

5. Vorrichtung gemäß einem der Ansprüche 1 bis 3, wobei die zu öffnende Seite eine zweiteilige Stange ist.

6. Vorrichtung gemäß einem der vorangehenden Ansprüche, wobei die fingerartigen Elemente (4) obere und untere Schenkel (12, 13) aufweisen, wobei ein Rand (11) der Behälter zwischen die oberen und unteren Schenkel einführbar ist.

7. Vorrichtung gemäß einem der vorangehenden Ansprüche, wobei das feste Gestell (3) mechanische Elemente zum Heben und Senken des Rahmens (1) einschließt.

8. Vorrichtung gemäß Anspruch 7, wobei die mechanischen Elemente eine Zahnstange (15') und ein Ritzel (15) umfassen.

9. Vorrichtung gemäß einem der Ansprüche 1 bis 6, wobei das feste Gestell (3) hydraulische oder pneumatische Elemente zum Heben und Senken des Rahmens (1) einschließt.

10. Vorrichtung gemäß einem der vorangehenden Ansprüche, wobei mechanische Elemente zur Betätigung der Finger (4) vorgesehen sind.

11. Vorrichtung gemäß einem der Ansprüche 1 bis 9, wobei hydraulische oder pneumatische Elemente zur Betätigung der Finger (4) vorgesehen sind.

12. Verfahren zum Stapeln von Behältern mit oberen Rändern mittels der Vorrichtung, wie sie in einem der Ansprüche 1 bis 11 festgelegt ist, und wobei jede Schicht des Stapels einen, zwei oder vier Behälter umfaßt, das folgende Schritte umfaßt:
(a) Zuführen einer ersten Schicht von Behältern in den Rahmen mittels eines Rollenbands oder Förderbands (10);
(b) Ineingriffbringen der Finger (4) mit den oberen Rändern des Behälters oder der Behälter der ersten Schicht;
(c) Heben der ersten Schicht von Behältern auf ein höheres Niveau als die zweite zu stapelnde Schicht von Behältern;
(d) Zuführen der zweiten Schicht von Behältern in eine Position unterhalb der ersten Schicht; und
(e) Absenken des Rahmens (1), um die erste Schicht auf die zweite Schicht zu setzen.

13. Verfahren gemäß Anspruch 12, das die weiteren Schritte umfaßt:
(f) Außereingriffbringen der Finger (4) mit der ersten Schicht;
(g) Absenken des Rahmens (1) auf eine Stellung, bei der die Finger (4) mit den oberen Rändern des untersten Behälters oder der Behälter in der zweiten Schicht ausgerichtet sind
(h) Ineingriffbringen der Finger (4) mit den oberen Rändern des untersten Behälters oder der Behälter in der zweiten Schicht
(i) Anheben der zweiten Schicht und damit der ersten Schicht auf eine Position, bei der die zweite Schicht auf einem höheren Niveau als die nächste Schicht von zu stapelnden Behältern ist.
(j) Wiederholen der obigen Methode, bis eine gewünschte Anzahl von Schichten gestapelt ist; und dann Entstapeln durch:
(k) Absenken des Rahmens (1) auf eine Position, bei der die unterste Schicht von Behältern auf das Rollenband oder Förderband (10) abgesetzt ist;
(l) Außereingriffbringen der Finger (4) mit der untersten Schicht von Behältern.
(m) Öffnen der einen Seite (2) des Rahmens (1) und
(n) Entfernen des Stapels von mehreren Behälterschichten mittels des Rollenbands oder Förderbands (10).

14. Verfahren zum Entstapeln von Behältern, die gemäß dem in Anspruch 12 festgelegten Verfahren und mittels der in einem der Ansprüche 1 bis 11 festgelegten Vorrichtung gestapelt worden sind, das folgende Schritte umfaßt:
(o) Anheben des Rahmens (1), um die erste Schicht von der zweiten Schicht abzuheben;
(p) Entfernen der zweiten Schicht mittels des Rollenbands oder Förderbands (10);
(q) Absenken des Rahmens, um die erste Schicht auf das Rollenband oder Förderband (10) zu setzen.
(r) Außereingriffbringen der Finger (4) mit dem ersten Behälterstapel;
(s) Entfernen der ersten Schicht mittels des Rollenbands oder Förderbands (10).

15. Verfahren zum Stapeln von Behältern gemäß dem in Anspruch 12 oder Anspruch 13 festgelegten Verfahren, wobei vor dem Absenken der untersten Schicht eine Palette zwischen die unterste Schicht und das Rollenband oder Förderband plaziert wird.

16. Verfahren zum Stapeln von Behältern mit oberen Rändern mittels der in einem der Ansprüche 1 bis 11 festgelegten Vorrichtung, das folgendes umfaßt:
- Anordnen eines Stapels von mehreren Behälterschichten auf einer Palette auf dem Rollenband oder Förderband (10), wobei jede Schicht des Stapels einen, zwei oder vier Behälter umfaßt;
- Öffnen der einen Seite (2) des Rahmens;
- Zuführen des Stapels auf der Palette in den Rahmen;
- Schließen der Seite (2) des Rahmens;
- Ineingriffbringen der Finger (4) mit den oberen Rändern der Behälter der untersten Schicht des Stapels;
- Anheben des Stapels mittels der Finger (4); und dann
- Herausbewegen der Palette aus dem Rahmen.

## Revendications

1. Dispositif d'empilage et de désempilage pour des conteneurs, dans lequel chaque couche de l'empilage comprend un, deux ou quatre conteneurs, comportant :
(a) un châssis de levage s'étendant horizontalement (1);
(b) un support fixe (3) comportant un moyen pour élever et abaisser ledit châssis (1); et
(c) un convoyeur à rouleaux ou bande de convoyage (10) pour fournir une couche ou des couches de conteneurs audit châssis de levage (1) et les enlever dudit châssis de levage (1);
caractérisé en ce que :
(d) ledit châssis (1) est un châssis fermé à quatre côtés, des moyens en forme de doigts mobiles horizontalement (4) étant montés sur les quatre côtés dudit châssis (1) pour mise en contact avec une couche de conteneurs; et
(e) un côté (2) dudit châssis (1) peut être ouvert.

2. Dispositif selon la revendication 1, dans lequel ledit côté pouvant être ouvert est mobile dans un plan horizontal.

3. Dispositif selon la revendication 1, dans lequel ledit côté pouvant être ouvert est mobile dans un plan vertical.

4. Dispositif selon l'une quelconque des revendications 1 à 3, dans lequel ledit côté pouvant être ouvert est une barre en une pièce.

5. Dispositif selon l'une quelconque des revendications 1 à 3, dans lequel ledit côté pouvant être ouvert est une barre en deux parties.

6. Dispositif selon l'une quelconque des revendications précédentes, dans lequel les moyens en forme de doigts (4) comportent des branches supérieure et inférieure (12, 13), à la suite de quoi une bordure (11) des conteneurs peut s'étendre entre lesdites branches supérieure et inférieure.

7. Dispositif selon l'une quelconque des revendications précédentes, dans lequel le support fixe (3) comprend un moyen mécanique pour élever et abaisser le châssis (1).

8. Dispositif selon la revendication 7, dans lequel ledit moyen mécanique comprend une crémaillère (15') et un pignon (15).

9. Dispositif selon l'une quelconque des revendications 1 à 6, dans lequel le support fixe (3) comprend un moyen hydraulique ou pneumatique pour élever et abaisser le châssis (1).

10. Dispositif selon l'une quelconque des revendications précédentes, dans lequel un moyen mécanique est fourni pour actionner lesdits doigts (4).

11. Dispositif selon l'une quelconque des revendications 1 à 9, dans lequel un moyen hydraulique ou pneumatique est fourni pour actionner lesdits doigts (4).

12. Procédé pour empiler des conteneurs ayant des bordures supérieures au moyen du dispositif défini par l'une quelconque des revendications 1 à 11 et dans lequel chaque couche de l'empilage comprend un, deux ou quatre conteneurs, ledit procédé comportant :
(a) l'introduction d'une première couche des dits conteneurs dans ledit châssis au moyen dudit convoyeur à rouleaux ou de la bande de convoyage (10);
(b) le déplacement desdits doigts (4) pour les amener en contact avec les bordures supérieures du ou des conteneurs de ladite première couche;
(c) l'élévation de la première couche de conteneurs jusqu'à un niveau supérieur à celui d'une seconde couche de conteneurs devant être empilés;
(d) l'introduction de la seconde couche de conteneurs à une position située au-dessous de la première couche; et
(e) l'abaissement du châssis (1) afin de placer la première couche sur la seconde couche.

13. Procédé selon la revendication 12 et comprenant en outre :
(f) le déplacement desdits doigts (4) pour les dégager de la première couche;
(g) l'abaissement du châssis (1) jusqu'à une position dans laquelle les doigts (4) sont en alignement avec les bordures supérieures du ou des conteneurs les plus en bas de la seconde couche;
(h) le déplacement des doigts (4) pour les mettre en contact avec les bordures supérieures du ou des conteneurs les plus en bas de la seconde couche;
(i) l'élévation de la seconde couche et avec elle de la première couche jusqu'à une position dans laquelle la seconde couche se trouve à un niveau plus élevé que celui de la couche suivante de conteneurs devant être empilés;
(j) la répétition du mode opératoire ci-dessus jusqu'à ce qu'un nombre désiré de couches ait été empilé; et alors le désempilage par :
(k) l'abaissement du châssis (1) jusqu'à une position dans laquelle la couche inférieure de conteneurs est déposée sur le convoyeur à rouleaux ou la bande de convoyage (10);
(l) le déplacement desdits doigts (4) pour les dégager de ladite couche inférieure de conteneurs;
(m) l'ouverture dudit côté (2) du châssis 1; et
(n) l'enlèvement dudit empilage de plusieurs couches de conteneurs au moyen dudit convoyeur à rouleaux ou de la bande de convoyage (10).

14. Procédé pour désempiler des conteneurs qui ont été empilés selon le mode opératoire défini dans la revendication 12 et au moyen du dispositif défini dans l'une quelconque des revendications 1 à 11, comprenant :
(o) l'élévation du châssis (1) de manière à élever la première couche et la dégager de la seconde couche;
(p) l'enlèvement de la seconde couche au moyen dudit convoyeur à rouleaux ou de la bande de convoyage (10);
(q) l'abaissement du châssis afin de placer la première couche sur le convoyeur à rouleaux ou la bande de convoyage (10);
(r) le déplacement desdits doigts (4) pour les dégager dudit premier empilage de conteneurs;
(s) l'enlèvement de ladite première couche au moyen dudit convoyeur à rouleaux ou de la bande de convoyage (10).

15. Procédé pour empiler des conteneurs selon le procédé défini dans la revendication 12 ou dans la revendication 13, et dans lequel, avant que la couche inférieure ne soit abaissée, une palette est placée entre ladite couche inférieure et ledit convoyeur à rouleaux ou la bande de convoyage.

16. Procédé pour empiler des conteneurs ayant des bordures supérieures au moyen du dispositif défini dans l'une quelconque des revendications 1 à 11 comprenant :
- la disposition d'un empilage de plusieurs couches de conteneurs sur une palette sur ledit convoyeur à rouleaux ou la bande de convoyage (10), chaque couche de l'empilage comportant un, deux ou quatre conteneurs;
- l'ouverture dudit côté (2) du châssis;
- l'introduction de l'empilage placé sur ladite palette dans le châssis;
- la fermeture dudit côté (2) du châssis;
- le déplacement desdits doigts (4) pour les mettre en contact avec les bordures supérieures des conteneurs de la couche inférieure de l'empilage;
- l'actionnement desdits doigts (4) afin d'élever ledit empilage; et alors
- le déplacement de la palette pour la sortir du châssis.
